# EUROPEAN PATENT APPLICATION

(11) **EP 1 798 063 A1**
(43) Date of publication of application: **20.06.2007**
(21) Application number: 06125717.6
(22) Date of filing: 08.12.2006
(51) Int. Cl.: B60C 11/00, B60C 13/00

(54) **Camouflage or otherwise multicolored tire**

(30) Priority: 19.12.2005 US 305945
(71) Applicant: THE GOODYEAR TIRE & RUBBER COMPANY, Akron, Ohio 44316-0001 (US)
(72) Inventor: Brei, Stephen Theodore, Akron, OH 44312 (US); Balogh, George Frank, North Canton, OH 44720 (US); Bezilla, Jr., Bernard Matthew, Stow, OH 44224 (US)
(74) Representative: Kutsch, Bernd

(57) **Abstract**

The present invention is directed to a pneumatic tire (2) including an elastomeric veneer (12) disposed on at least one exterior surface of the tire, the elastomeric veneer (12) including at least two partially co-blended colored rubber compositions wherein the at least two colored rubber compositions are of different colors, the elastomeric veneer displaying at least two irregularly variegated colors including a plurality of elongated multicolored striae (6), the at least two variegated colors having a camouflage effect that reduces or eliminates a viewer's visual perception of the tire relative to an environmental background.

## Description

### Field of the Invention

This invention relates to multicolored tires generally, and more particularly to camouflaged tires.

### Background of the Invention

Camouflage is a way to hide or conceal a person or an object from its surroundings. The objective is to blend into the environment and to avoid detection.

The natural techniques of concealment have been adapted by humans in recreational hunting and for military purposes.

For years the art of concealment by the use of camouflage has evolved from the simple use of netting to the art of painting vehicles and dressing personnel by using specific camouflaged patterns.

In the case of vehicles, one area that has been both overlooked and avoided has been the tires of the vehicles. Some attempts to provide camouflage netting over the wheel wells have been attempted but basically the concept of wheel concealment has been ignored. This is partly because the wheel is already in the shadows of the body of the vehicle in some cases and in other cases it has been generally understood that large vehicles on the move are easily detected. Accordingly, these vehicles are generally covered by camouflage netting when they are stopped. However, when on the move these vehicles generally do not rely heavily on their camouflage.

In recent years small agile, very fast reconnaissance vehicles are being used by scouts or Special Forces troops who require the element of concealment and surprise to accomplish their objectives. These soldiers have adopted four and six wheel off road vehicles similar to the All Terrain Vehicle (ATV) vehicles used for recreational hunting.

These vehicles have the tires generally exposed and the tires are a dominant visual pattern easily spotted by opposing forces, whether the vehicles are moving or stationary the tires become a prominent feature that can be easily detected.

It is an object of the present invention to provide a camouflaged tire to enhance concealment of vehicles.

It is another object of the present invention to provide a simple and efficient way to produce such a tire that can survive harsh off road conditions.

### Summary of the Invention

The present invention is directed to a pneumatic tire according to claim 1, 2 or 5.

Dependent claims cover preferred embodiments of the invention.

### Brief Description of the Drawings

FIG. 1 is a perspective view of a camouflaged tire according to the invention.
FIG. 2 is a perspective view of a tire wherein one or both sidewalls have a camouflaged surface.
FIG. 3 is a view of two elastomeric sheets or layers of colored materials passing through a calendar to produce a variegated elastomeric veneer.
FIG. 4 shows an uncured tire assembly on a building drum a variegated elastomeric veneer applied to the peripheral surface of the uncured tire.
FIG. 5 shows a photograph of a variegated three-color elastomeric veneer.
FIG. 6 shows a photograph of a variegated four-color elastomeric veneer.
FIG. 7 shows a photograph of a cured tire including a variegated three-color elastomeric veneer.
FIG. 8 shows a photograph of a cured tire including a variegated four-color elastomeric veneer.

### Detailed Description of the Invention

There is disclosed a pneumatic tire comprising an elastomeric veneer disposed on at least one exterior surface of the tire, the elastomeric veneer comprising at least two partially co-blended colored rubber compositions wherein the at least two colored rubber compositions are of different colors, the elastomeric veneer displaying at least two irregularly variegated colors comprising a plurality of elongated multicolored striae, the at least two variegated colors having a camouflage effect that reduces or eliminates a viewer's visual perception of the tire relative to an environmental background.

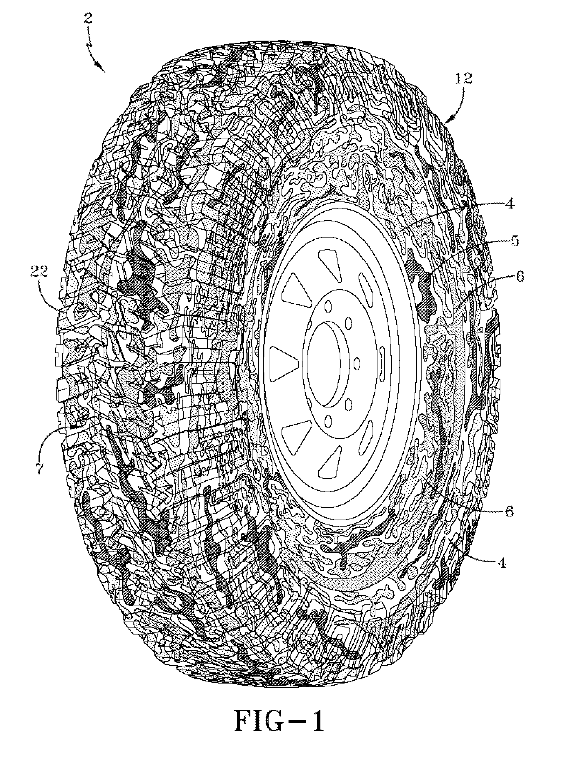

With reference to Figure 1, a perspective view of an exemplary camouflaged tire 2 made according to the invention is illustrated. As shown the tire 2 has variegated coloring 4 on the tire outer surfaces including the sidewall 5 and tread 7. The variegated coloring 4 includes a plurality of elongated striae 6 of contrasting color. The variegated coloring 4 including striae 6 comprise contrasting colors provided in irregular shapes and patterns on the surface of the tire to have a camouflage effect such that the tire 2 blends in with the surrounding environment. As such, the variegated coloring 4 has a camouflage effect that reduces or eliminates a viewer's visual perception of the tire 2 relative to an environmental background.

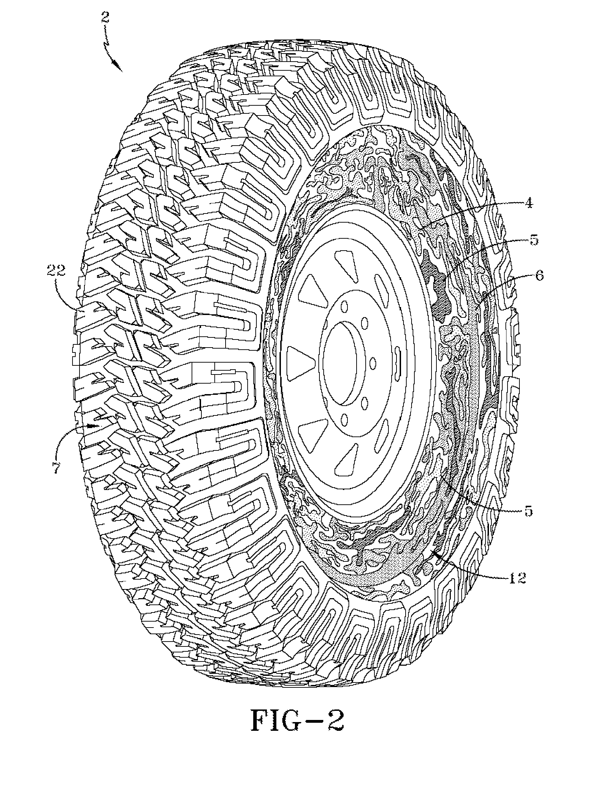

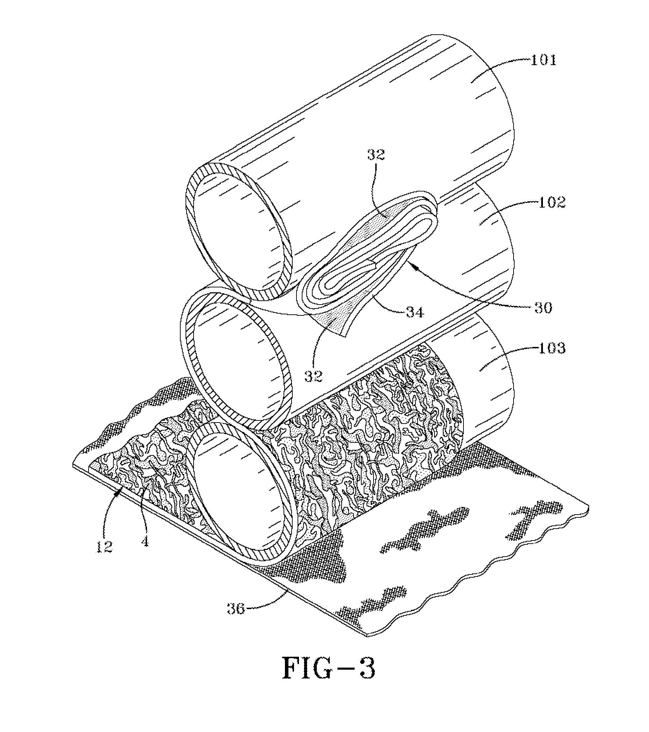

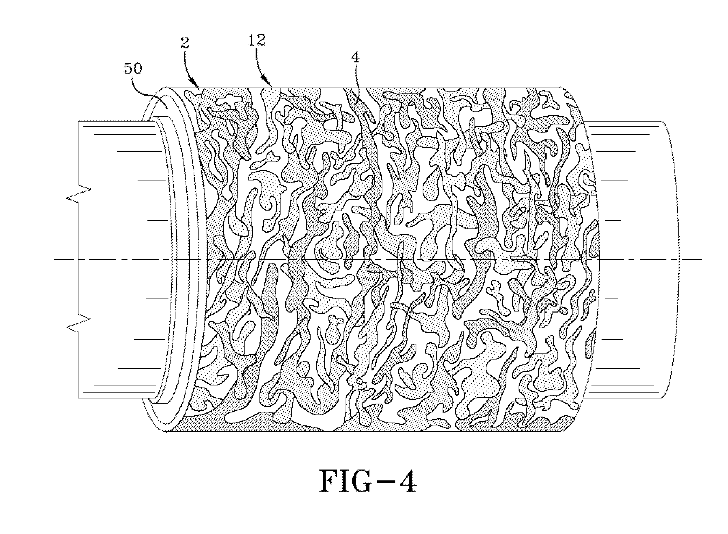

As shown in Figure 1, the variegated coloring 4 has a plurality of striated colors in the form of striae 6. In one embodiment, variegated coloring 4 may be formed in elastomeric veneer 12 that is applied to the tire 2 in the uncured state. A method of laying up elastomer veneer 12 is illustrated in Figures 3 and 4. Figure 3 shows one method of fabricating the elastomeric veneer 12 with variegated coloring 4, following the teaching of US-A- 1,619,359, fully incorporated herein by reference. Figure 4 shows the elastomeric veneer 12 of material being applied on a tire building drum 50. Stretching of the elastomeric veneer 12 is optional and although not required helps enhance the irregular shape and gives greater non-uniformity to the patterns. As the elastomeric veneer 12 is applied using one turn of the building drum 50 it is stitched onto the uncured tire assembly 2 and firmly attached. The result is the tire as shown in Figure 1. Alternatively, the elastomeric veneer 12 can be provided such that it is only applied to the sidewall portions of the uncured tire 2 as shown in Figure 2. In such case, a narrower piece of material can be used and stretched and stitched directly onto the carcass in the sidewall area 5 on both sides of the tire 2 or only one side 5 of the tire 2. When using such a technique, the variegated coloring 4 will extend up to the tread area 7 but not necessarily extend over it. In such a pattern the treads 7 would then be left in their original black shape, however, as shown in Figure 2 but the sidewalls 5 would have the camouflage feature. This may be desirable due to the fact that as the tread 7 wears the variegated coloring 4 at least at the tread lugs 22 will tend to disappear and will only remain in the groove areas of the tread. While this may be acceptable in some applications, it may be preferable simply to only camouflage the sidewalls 5. This may be particularly true in trucks or other vehicles where the sidewalls are exposed but the tread is within the wheel well of the vehicle.

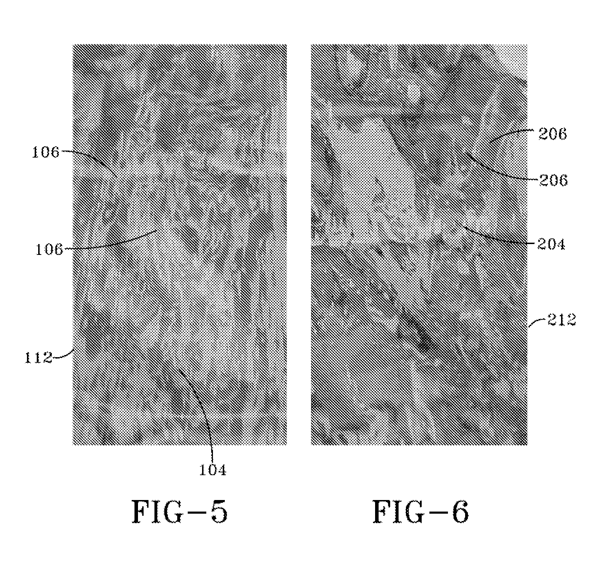

It is to be understood that variegated coloring 4 as shown in Figures 1-4 is stylized for illustration and not representative of all embodiments of the veneer 12 and tire 2. As will be further illustrated in the Examples herein, the variegated coloring 4, veneer 12 and tire 2 are best illustrated with reference to photographs of actual practice of the invention, as seen in Figures 5 through 8.

With reference again to Figure 3, a method of producing a variegated elastomeric veneer 12 is illustrated, following the teaching of US-A-1,619,359. To produce the variegated elastomer veneer 12, sheets of elastomeric material 32, 34 are alternately stacked and folded in to a calender feed component. In an alternate embodiment, the sheets of elastomeric material 32, 34 may be assembled and passed through a mill in one pass to produce feed component prior to calendering; in this embodiment feed component may be folded in various configurations such as an envelope and the like to obtain the desired variegation effect. Elastomeric sheets 32 and 34 are of different colors, and upon passage through the calender rolls 101, 102 and 103 the feed component is formed into the variegated elastomeric veneer 12. Although the feed component is shown in Figure 3 to comprise two elastomeric sheets 32 and 34, the feed component may comprise a plurality of elastomeric sheets, of varying colors to obtain the desired variegated pattern in variegated elastomeric veneer 12. Upon exit from the calendar rolls, variegated elastomeric veneer 12 is wound on a backing sheet 36 for storage or subsequent use in production of the tire 2.

As a further alternative embodiment, a clear coating or layer of materials such as urethane could be applied to the outer surface of the uncured tire and cured with the uncured tire in such a fashion that the underlying veneer of the variegated coloring 4 can be protected.

It has been found that the proper selection of elastomeric materials compatible with the tread 7 and sidewall 5 are sufficient to provide excellent adhesion of the elastomeric veneer 12 such that it does not peel or abrade from the tire surfaces but is actually integrally bonded to the underlying materials. This is important as the end user does not want the veneer to peel off or to be lost due to the extreme flexure and punctures and scratches that are accomplished in off road tire vehicle use.

The elastomeric veneer is fabricated from a vulcanizable rubber composition including at least one rubber containing olefinic unsaturation. The phrases "rubber or elastomer containing olefinic unsaturation" or "diene based rubbers" are intended to include both natural rubber and its various raw and reclaim forms as well as various synthetic rubbers. In the description of this invention, the terms "rubber" and " elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) may be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The term "phr" as used herein, and according to conventional practice, refers to "parts by weight of a respective material per 100 parts by weight of rubber, or elastomer."

The rubber composition may include up to 70 phr of processing oil. Processing oil may be included in the rubber composition as extending oil typically used to extend elastomers. Suitable process oils include various oils as are known in the art, including aromatic, paraffinic, naphthenic, vegetable oils, and low PCA oils, such as MES, TDAE, SRAE and heavy naphthenic oils.

The vulcanizable rubber composition may include from 10 to 150 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

The rubber composition for use in the elastomeric veneer generally contains little or no carbon black, owing to the desirable display of color in the variegated coloring. However, some carbon black may be present in the composition either as a component of the coloring or as residual contaminant in other compounding ingredients.

In one embodiment the rubber composition for use in the tire tread may contain a conventional sulfur containing organosilicon compound. Examples of suitable sulfur containing organosilicon compounds

In one embodiment, the sulfur containing organosilicon compounds are the 3,3'-bis(trimethoxy or triethoxy silylpropyl) sulfides. In one embodiment, the sulfur containing organosilicon compounds are bis (trialkoxysilylalkyl) sulfides such as 3,3'-bis(triethoxysilylpropyl) disulfide and 3,3'-bis(triethoxysilylpropyl) tetrasulfide.

In another embodiment, suitable sulfur containing organosilicon compounds include compounds disclosed in US-A- 6,608,125, such as 3-(octanoylthio)-1-propyltriethoxysilane, CH₃(CH₂)₆C(=O) S CH₂CH₂CH₂Si(OCH₂CH₃)₃, which is available commercially as NXT^{™} from GE Silicones.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur). The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr or representative antioxidant may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator may be used with the secondary accelerator being used in smaller amounts, such as from 0.05 to 3 phr. Suitable types of accelerators that may be used in the present invention are amines, disulfides, guanidines and xanthates. In one embodiment, the primary accelerator is a sulfenamide. If a second accelerator is used, the secondary accelerator may be a guanidine, dithiocarbamate or thiuram compound.

The rubber composition may comprise one or more colorants as are desired to impart a given color or pattern to the camouflage tire. The color imparted by the colorants is not limited and may include any color obtainable with known colorant additives. The colorants may include any suitable dyes, pigments, or the like that impart the desired color. The colorants may be included in the water or solvent based coating liquid or mixed with the coating liquid immediately prior to application to the tire. The relative amount of colorant to be added to the coating liquid is dependent on the type of colorant, the desired color, and the desired intensity of the color, as would be appreciated by one of skill in the art without undue experimentation.

Dyes are generally defined as compounds which contain groups that confer color, generally called chromophores. More information on dyes in general is available in The Chemistry of Synthetic Dyes, Volumes I and II by K. Venkaktaraman, 1952, published by Academic Press, Inc., New York, and in Organic Chemistry by W. T. Caldwell, 1943, published by Houghton Mifflin Company in its chapter entitled "Synthetic Dyes," Pages 702 through 725.

The rubber compositions of the present invention also may contain color pigments, including inorganic pigments, such as titanium dioxide, talc, mica, iron oxides, lead oxides, chromium oxides, lead chromate and carbon black, including conductive carbon black, and organic pigments such as phthalocyanine blue and phthalocyanine green, as well as a variety of other color pigments.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C.

The rubber composition after compounding is formed into the elastomeric veneer which is then applied to a green tire.

Vulcanization of the pneumatic tire of the present invention is generally carried out at conventional temperatures ranging from 100°C to 200°C.

As previously noted the elastomeric veneer may comprise two or more colors to make up the variegated coloring. Accordingly, in urban and snow areas black can be used in combination with varying amounts of white and gray to achieve either the urban or the snow colored tire for that particular camouflage requirement. Alternatively, the forest camouflage commonly used in wooded areas can use green, tan and black to achieve a desired camouflage technique for that environment. Finally, a tire can be manufactured with a color other than black such as brown and a lighter brown and tan can be used to achieve a sand or desert type camouflage.

While this invention has been directed primarily for the purpose of camouflaging tires, it is also directly applicable to providing tires having distinct colors or patterns by employing one or more colored veneer surfaces, preferably multicolored. This may be desirable for aesthetic looks for appearances where one wants to achieve multicolored tires.

The invention is further illustrated by the following examples.

### Example 1

In this example, the construction of a camouflage tire is illustrated. A camouflage tire was produced using a variegated veneer made from five colored rubber compounds. Each of the colored compounds was made following the compound formulation in Table 1, with all amounts given in parts by weight per 100 parts by weight of elastomer (phr). Colorants were added to produce colored compounds of light green, green, light brown, brown, and black using colorants as shown in Table 2.

**Table 1**

| | |
|---|---|
| Polybutadiene rubber | 40 |
| Styrene-butadiene rubber | 60 |
| Silica | 76 |
| Process oil | 17 |
| Phenylene diamine antidegradants | 3.5 |
| Tackifying resin | 2 |
| Zinc oxide | 2.5 |
| Silane coupler, 70% active | 6 |
| Stearic acid | 3 |
| Sulfenamide accelerators | 3.7 |
| Sulfur | 1.6 |

**Table 2**

| **Compound Color** | **It brown** | **brown** | **green** | **It green** | **black** |
|---|---|---|---|---|---|
| Yellow¹ | 0.7 | 0.54 | 0.64 | 1.06 | 0 |
| Green² | 0 | 0 | 4.58 | 1.69 | 0 |
| Red³ | 0.32 | 0.32 | 0.32 | 0.32 | 0 |
| Black⁴ | 0.88 | 1.06 | 1.08 | 1.06 | 0 |
| White⁵ | 0.26 | 0 | 0 | 4.3 | 0 |
| Carbon black | 0 | 0 | 0 | 0 | 2 |

| | | | | | |
|---|---|---|---|---|---|
| ¹Akrochem Yellow E-18393 ²Akrochem Green E-2798 ³Akrochem Red E-4211 ⁴Akrochem Black E-8846 ⁵DuPont TiO₂R101 | | | | | |

Sheets of the colored compounds having a gauge of 0.030 inch were laid up in an alternating fashion between sheets of uncolored rubber compound and passed through a mill in a single pass with no banding to create a calender feed component. The feed component was then passed through a calender for a single pass at a gauge of 0.060 inch and 35 inch width and wound on plastic sheeting to produce the camouflage variegated veneer. Trim was not allowed to re-enter the calender bank to prevent gray out of the windup sheet.

Sheets of the camouflage variegated veneer were cut to size (full-width bead to bead) and applied by hand to a green tire. Low veneer tack required cementing at tire machine, and the veneer was hand-stitched. Tires were sprayed with inside lining only (no precure paint). Tires cured successfully without any major irregularities. Cure times were increased 10% to accommodate the increased tire gauge. Tires tested successfully for traction, durability and ride.

### Example 2

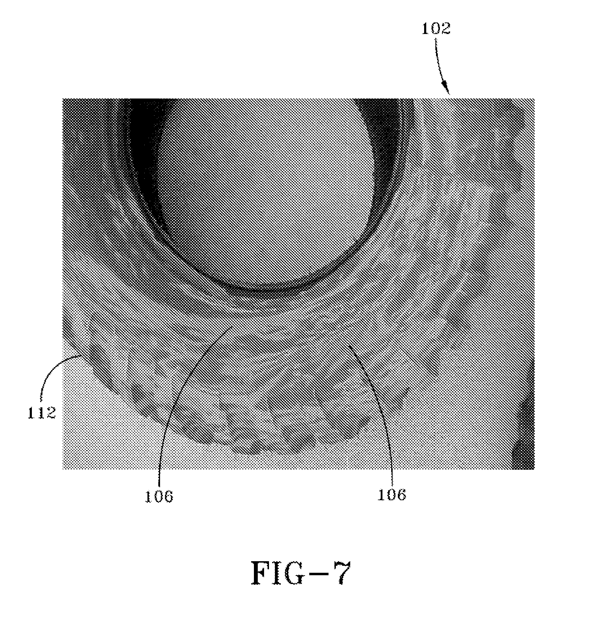

A camouflage tire was produced using a variegated veneer made from three separate color compounds. The tire was produced following the procedures of Example 1, except that some variation in coloring was used. The variegated veneer 112 produced from the calendar is shown in Figure 5, and the tire 102 having the variegated veneer 112 applied is shown in Figure 7. As seen in Figures 5 and 7, variegated veneer 112 includes striae 104, 106 of multiple colors to impart a camouflage effect to the tire.

### Example 3

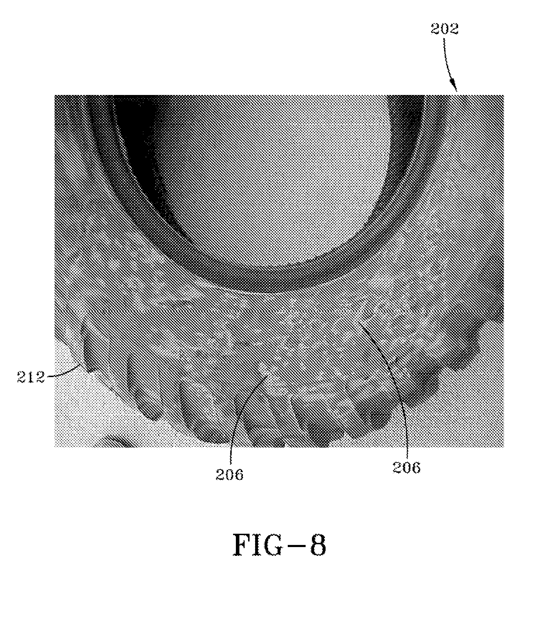

A camouflage tire was produced using a variegated veneer made from four separate color compounds. The tire was produced following the procedures of Example 1, except that some variation in coloring was used. The variegated veneer 212 produced from the calendar is shown in Figure 6, and the tire 202 having the variegated veneer 212 applied is shown in Figure 8. As seen in Figures 6 and 8, variegated veneer 212 includes striae 204, 206 of multiple colors to impart a camouflage effect to the tire.

## Claims

1. A pneumatic tire comprising an elastomeric veneer (12) disposed on at least one exterior surface of the tire (12), the elastomeric veneer (12) comprising at least two partially co-blended colored rubber compositions wherein the at least two colored rubber compositions are of different colors, the elastomeric veneer displaying at least two irregularly variegated colors comprising a plurality of elongated multicolored striae (6).

2. A pneumatic tire comprising an elastomeric veneer disposed on at least one exterior surface of the tire (2), the elastomeric veneer (12) comprising at least two irregularly variegated colors, the at least two irregularly variegated colors comprising a plurality of elongated multicolored striae (6), the at least two variegated colors having a camouflage effect that reduces or eliminates a viewer's visual perception of the tire (2) relative to an environmental background.

3. The pneumatic tire of claim 1 or 2, wherein the at least one exterior surface comprises a sidewall surface (5) and a tread surface (7), and the elastomeric veneer (12) is disposed on the sidewall surface (5) and the tread surface (7); or wherein the at least one exterior surface comprises a sidewall surface (5), and the elastomeric veneer (12) is disposed on the sidewall surface (15).

4. The pneumatic tire of claim 1, 2 or 3 wherein the elastomeric veneer (12) comprises three or four partially co-blended colored rubber compositions, and the elastomeric veneer (12) respectively displays three or four irregularly variegated colors.

5. A pneumatic tire comprising at least one exterior surface, the at least one exterior surface comprising at least two irregularly variegated colors.

6. The pneumatic tire of claim 5 wherein the at least two irregularly variegated colors have a camouflage effect that reduces or eliminates a viewer's visual perception of the tire (2) relative to an environmental background.

7. The pneumatic tire of claim 5 or 6, wherein the at least two irregularly variegated colors comprise a plurality of elongated multicolored striae (6).

8. The pneumatic tire of claim 5, 6 or 7, wherein the at least one exterior surface comprises a sidewall surface and a tread surface, and the at least two irregularly variegated colors are disposed on the sidewall surface and the tread surface; or wherein the at least one exterior surface comprises a sidewall surface, and the at least two irregularly variegated colors are disposed on the sidewall surface.

9. The pneumatic tire of at least one of the claims 5-8, wherein the tire comprises an elastomeric veneer disposed on the at least one exterior surface, the elastomeric veneer comprising the at least two irregularly variegated colors, preferably three irregularly variegated colors or four irregularly variegated colors.
